# EUROPEAN PATENT APPLICATION

(11) **EP 0 833 149 A1**
(43) Date of publication of application: **01.04.1998**
(21) Application number: 97307479.2
(22) Date of filing: 24.09.1997
(51) Int. Cl.: G01N 27/49, G01N 27/333

(54) **Method for measuring ion concentration**

(30) Priority: 25.09.1996 JP 253588/96
(71) Applicant: KYOTO DAIICHI KAGAKU CO., LTD., Kyoto-shi Kyoto-fu (JP)
(72) Inventor: Senda,Mitsugi, Sakyo-ku,Kyoto-shi Kyoto (JP); Uenoyama,Harumi c/o Kyoto Daiichi Kagaku Co Ltd, Minami-ku, Kyoto-shi Kyoto (JP); Matuoka,Shiro c/o Kyoto Daiichi Kagaku Co Ltd, Minami-ku, Kyoto-shi Kyoto (JP)
(74) Representative: Harding, Charles Thomas

(57) **Abstract**

A method for measuring a concentration of ions contained in a sample liquid using a current-detection ion-selective electrode includes the steps of contacting the current-detection ion-selective electrode and a counter electrode to the sample liquid; and applying at least one potential which is lower than a minimum value of a limiting current potential range for the ions between the current-detection ion-selective electrode and the counter electrode.

## Description

### BACKGROUND OF THE INVENTION

### 1. FIELD OF THE INVENTION:

The present invention relates to a method for measuring a concentration of ions contained in a sample liquid using a current-detection ion-selective electrode, and in particular to a method useful for measuring a wide range of ion concentrations with improved speed and accuracy.

### 2. DESCRIPTION OF THE RELATED ART:

Conventionally, flame photometry or coulometric titration, for example, is used to measure a concentration of such ions as sodium ions, potassium ions and chloride ions contained in a sample liquid. However, these methods have problems in that the measurement requires an excessively long time and that sufficiently accurate measurement results are not obtained due to measurement errors caused by dilution of the sample liquid.

In place of these methods, electrochemical sensors have recently bee used in the fields of industrial processes and medical diagnosis in order to measure the concentration of ions in sample liquids.

Examples of electrochemical sensors include a potential-detection ion-selective electrode and a current-detection ion-selective electrode.

A potential-detection ion-selective electrode detects a response potential which is in proportion to a logarithm of the activity of the ions contained in the sample liquid, and thus can measure any ion concentration from among a wide range of ion concentrations in a short time. However, a measurement error tends to occur because the response potential is in proportion to the logarithm of the ion activity. Such a measurement error is a serious problem especially when the sample liquid is a fluid from an organism since a higher accuracy is demanded in such a case. Furthermore, in actual measurement, the response potential obtained using such an electrode may change in some cases due to various substances contained in the fluid from the organism. Thus, such a potential-detection ion-selective electrode cannot provide satisfactory results when a higher accuracy measurement is demanded.

A current-detection ion-selective electrode detects an ion or electron transfer reaction which occurs at an interface where two immiscible electrolyte solutions contact each other (e.g., .oil/water interface) using a conventional method used in polarography or voltammetry. A response current obtained using the current-detection ion-selective electrode is in direct proportion to the ion concentration. Accordingly, the range in which the ion concentration can be detected is narrower than in the case where a potential-detection ion-selective electrode is used. However, due to the direct relationship between the response current and the ion concentration, the current-detection ion-selective electrode tends to the said avoid measurement errors and thus provides higher measurement accuracy when compared with the potential-detection ion-selective electrode.

Some technologies regarding the current-detection ion-selective electrode have been reported.

For example, Japanese Publication for Opposition No. 5-6658 discloses a current-detection ion-selective electrode for voltammetry, which utilizes an ion or electron transfer reaction at an oil/water interface. Japanese Laid-Open Publication No. 6-229973 discloses a high-speed disposable current-detection ion-selective electrode, which is easy to use and available at low cost.

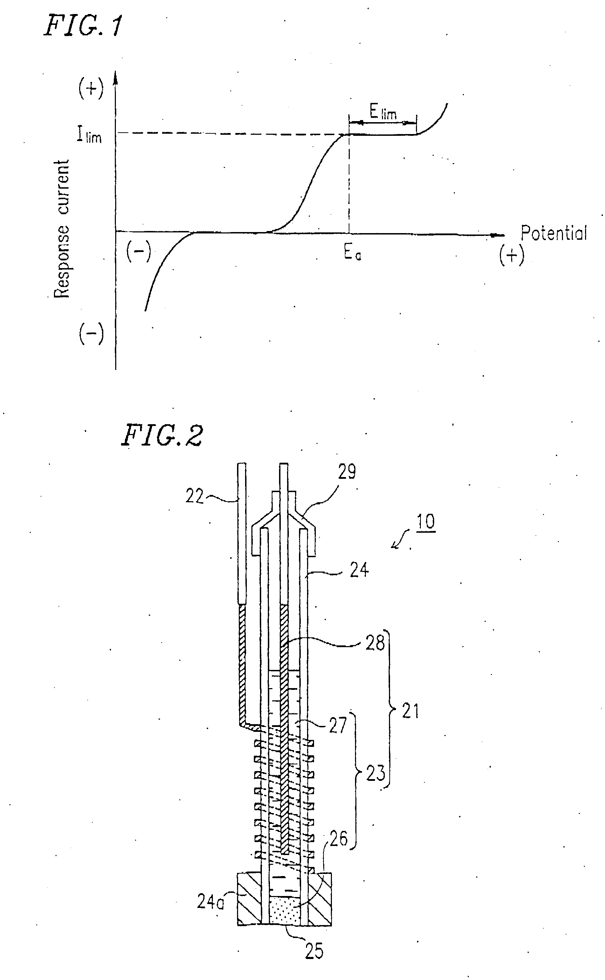

When a current-detection ion-selective electrode is used to perform normal pulse voltammetry of a sample liquid containing ions at a known concentration under arbitrary conditions, a response current-potential curve (current-potential curve; normal pulse voltammogram) as shown in Figure 1 is obtained. Such a current-potential curve has a plateau part which shows a substantially constant response current when a potential within a specific range is applied. The response current of the plateau part of the current-potential curve is generally referred to as a "limiting current (Iₗᵢₘ)", and a range of potentials corresponding to the limiting current Iₗᵢₘ is referred to as a "limiting current potential range Eₗᵢₘ". It is known that whichever potential in the limiting current potential range Eₗᵢₘ is applied, the value of the limiting current Iₗᵢₘ is substantially the same; and that the value of the limiting current Iₗᵢₘ is in proportion to the ion concentration of the sample liquid. Furthermore, a method for measuring the minimum value Eₐ and the maximum value of the limiting current potential range Eₗᵢₘ are known in the art.

Usually, the concentration of ions in the sample liquid is measured in the following manner when using a current-detection ion-selective electrode.

First, normal pulse voltammetry of a plurality of solutions each containing a prescribed type of ions at a known concentration is performed using a current-detection ion-selective electrode, thereby obtaining the limiting current potential range Eₗᵢₘ corresponding to each of the respective solutions. Next, a potential which is included in all of these limiting current potential ranges is applied to the current-detection ion-selective electrode in each of the plurality of solutions containing the ions at known concentrations, using pulse amperometry. Then, the resultant response current levels are measured. Thus, a calibration curve showing the relationship between the response current levels and the corresponding ion concentrations is created.

Then, the same potential as above included in all the limiting current potential ranges is applied to a current-detection ion-selective electrode in a sample liquid containing ions at an unknown concentration, and the resultant response current level is measured. The ion concentration of the sample liquid is obtained using the above-described calibration curve and the resultant response current level.

Such a measuring method does not provide an accurate ion concentration of a sample liquid, such as human plasma, having an excessively high ion concentration.

Human plasma normally contains sodium ions at a concentration in the range between 135 millimol/liter to 148 millimol/liter and potassium ions at a concentration in the range between 3.5 millimol/liter to 5.5 millimol/liter. In an abnormal case, the concentrations of sodium ions and potassium ions can exceed the above-mentioned values.

It is described in Yukitaka Yamamoto, Toshiharu Nuno, Toshiyuki Osakai, and Mitsugi Senda, Bunseki Kagaku, 38, 589 (1989), that when a current-detection ion-selective electrode is used, the value of the limiting current Iₗᵢₘ obtained from the voltammogram is in proportion to the ion concentration only within the range of ion concentrations of 0.05 millimol/liter to 0.70 millimol/liter.

It is also described that the level of the response current obtained by pulse amperometry is in proportion to the ion concentration within the range of 0.0 millimol/liter to 0.7 millimol/liter. The pulse amperometry is performed at a potential included in all the limiting current potential ranges using a current-detection ion selective electrode.

Accordingly, a calibration curve created by the above-described measurement method may undesirably lose linearity as a result of saturation of the response current with respect to an excessively high ion concentration. Thus, an excessively high ion concentration cannot be measured accurately by the above-described method.

Yamamoto et al. (supra) uses an electrode including an oil phase having an ionophore concentration of 20 millimol/liter and expects that the upper limit of the ion concentration which is in proportion to the response current is about 1/20 to 1/50 of each of the concentrations of the ionophores and the supporting electrolyte contained in the oil phase of the current-detection ion-selective electrode.

Accordingly, an excessively high ion concentration can generally be measured by raising the concentration of the ionophore dissolved in the oil phase of the current-detection ion-selective electrode. Measurement of an excessively high ion concentration, for example, measurement of a sodium ion concentration in human plasma requires an ionophore concentration of 3 mol/liter or more, and measurement of a potassium ion concentration in human plasma requires an ionophore concentration of 100 millimol/liter or more.

It is described in M. D. Osborne, H. H. Girault, Electroanalysis, 7, No. 8, pp. 714 (1995), that dibenzo-18-crown-6, which is a type of ionophore, is dissolved in 1,2-dichloroethane (used as an oil phase medium in a current-detection ion-selective electrode) up to only 0.083 mol/liter. From this, it is expected that an excessively high, concentration of the ionophore cannot be dissolved in the oil phase of the current-detection ion-selective electrode and thus that it is impossible to measure such a high ion concentration in this manner. Furthermore, materials used as the ionophore are generally expensive. Use of an ionophore at a high concentration raises production cost of the electrode.

It may be assumed that high ion concentration can be measured after the sample liquid is diluted. However, the dilution is time-consuming and tends to cause measurement errors.

### SUMMARY OF THE INVENTION

According to one aspect of the invention, a method for measuring a concentration of ions contained in a sample liquid using a current-detection ion-selective electrode includes the following steps: contacting the current-detection ion-selective electrode and a counter electrode to the sample liquid; and applying at least one potential which is lower than a minimum value of a limiting current potential range for the ions between the current-detection ion-selective electrode and the counter electrode.

In one embodiment of the invention, the step of applying the potential includes the step of performing either one of a step potential method and a pulse potential method.

In one embodiment of the invention, the ions are at least one type of ions selected from the group consisting of monovalent cations, bivalent cations, tervalent cations and monovalent anions.

In one embodiment of the invention, the ions are at least one type of ions selected from the group consisting of sodium ions, potassium ions, chloride ions, magnesium ions and calcium ions, and the sample liquid is a fluid from an organism.

In one embodiment of the invention, the sample liquid is one selected from the group consisting of a fluid from an organism, plant waste water, and a liquid existing in an environment.

In one embodiment of the invention, the current-detection ion-selective electrode includes an ion-sensitive section which is ion selective with respect to the ions in the sample liquid and an electrode member in contact with the ion-sensitive section.

In one embodiment of the invention, the ion-sensitive section includes an ionophore and a supporting electrolyte for releasing either one of cations and anions.

According to another aspect of the invention, a method for measuring a concentration of ions contained in a sample liquid using a current-detection ion-selective electrode includes the following steps: contacting the current-detection ion-selective electrode and a counter electrode to the sample liquid; applying at least one potential which is lower than a minimum value of a limiting current potential range for the ions between the current-detection ion-selective electrode and the counter electrode; and detecting a level of a response current generated between the current-detection ion-selective electrode and the counter electrode.

According to still another aspect of the invention, an apparatus for measuring a concentration of ions contained in a sample liquid using a current-detection ion-selective electrode includes a device for applying at least one potential which is lower than a minimum value of a limiting current potential range for the ions between the current-detection ion-selective electrode and the counter electrode both in contact with the sample liquid.

In one embodiment of the invention, the current-detection ion-selective electrode includes an ion-sensitive section which is ion selective with respect to the ions in the sample liquid and an electrode member in contact with the ion-sensitive section.

Thus, the invention described herein makes possible the advantages of (1) providing a method for measuring any ion concentration from among a wide range of ion concentrations of sample liquids, especially of a sample liquid having an excessively high ion concentration, with sufficient speed and accuracy, using a current-detection ion-selective electrode including an oil phase with an ionophore concentration of several millimol/liter to several tens of millimol/liter without increasing the concentration as is required by a conventional method, and (2) providing an effective method for quantifying an excessively high ion concentration of a fluid from an organism, such as human plasma, serum and urine.

These and other advantages of the present invention will become apparent to those skilled in the art upon reading and understanding the following detailed description with reference to the accompanying figures.

### BRIEF DESCRIPTION OF THE DRAWINGS

Figure **1** is a graph schematically showing the current-potential curve (normal pulse voltammogram) of a sample liquid containing ions at a specific concentration, the curve being obtained using a current-detection ion-selective electrode;
Figure **2** is a cross sectional view of an exemplary two-electrode sensor system usable in the present invention, including a current-detection ion-selective electrode and a counter electrode;
Figure **3** is a schematic diagram of an exemplary current-detection ion-selective electrode usable in the present invention where the ion-sensitive section includes a water phase and an oil phase;
Figure **4** is a schematic diagram of another exemplary current-detection ion-selective electrode usable in the present invention where the ion-sensitive section includes a water phase and an oil phase;
Figure **5** is a schematic diagram of still another exemplary current-detection ion-selective electrode usable in the present invention where the ion-sensitive section includes a single oil phase;
Figure **6** is a schematic view of an exemplary measuring sensor system for measuring an ion concentration of a sample liquid, using a two-electrode sensor system including a current-detection ion-selective electrode and a counter electrode according to the present invention;
Figure **7** is a graph showing the relationship between the applied potential and the time for sampling the response current in the case where one step potential is applied between the current-detection ion-selective electrode and the counter electrode;
Figure **8** is a graph showing the relationship between the applied potential and the time for sampling the response current in the case where two step potentials are applied between the current-detection ion-selective electrode and the counter electrode;
Figure **9** is a graph showing the relationship between the applied potential and the time for sampling the response current in the case where one pulse potential is applied between the current-detection ion-selective electrode and the counter electrode;
Figure **10** is a graph showing the relationship between the applied potential and the time for sampling the response current in the case where two pulse potentials are applied between the current-detection ion-selective electrode and the counter electrode;
Figure **11** is a schematic diagram of interfaces between the current-detection ion-selective electrode, the sample liquid and the counter electrode in the case where the sample liquid contains NaCl in an example according to the present invention;
Figure **12** is a graph illustrating the calibration curve representing the relationship between the calibrated current levels and the sodium ion concentrations obtained in an example according to the present invention; and
Figure **13** is a graph illustrating the calibration curve representing the relationship between the calibrated current levels and the sodium ion concentrations obtained in a comparative example.

### DESCRIPTION OF THE PREFERRED EMBODIMENTS

Hereinafter, the present invention will be described by way of illustrative, but .non-limiting examples with reference to the accompanying drawings.

Figure **2** shows an example of a two-electrode sensor system **10** having a current-detection ion-selective electrode **21** and a counter electrode **22**, which is used for measuring an ion concentration by a method according to the present invention.

The current-detection ion-selective electrode **21** includes an ion-sensitive section **23** and an electrode member **28**, both of which are accommodated in a glass tube **24**. One of two ends of the glass tube **24** is covered by a hydrophilic semipermeable membrane **25**. (The end covered by the hydrophilic semipermeable membrane **25** will be referred to as a "bottom end", and a part in the vicinity of the bottom end will be referred to as a "bottom part".) The ion-sensitive section **23** includes an oil phase **26** adjacent to the hydrophilic semipermeable membrane **25** and a water phase **27** adjacent to the oil phase **26**. The electrode member **28** is partially immersed in the water phase **27**. The other end of the glass tube **24** is covered by a cap **29** for securing the electrode member **28** to the glass tube **24**. A tube **24a** formed of polytetrafluoroethylene (PTFE), e.g., TEFLON®, is fit around a bottom part of the glass tube **24** for securing the hydrophilic semipermeable membrane **25**.

The counter electrode **22** is attached to an external circumferential surface of the glass tube **24** so as to be opposed to the electrode member **28**. The counter electrode **22** can partially be, for example, helically wound around a lower part of the glass tube **24** as shown in Figure **2**.

The above-described current-detection ion-selective electrode **21** can be used in a three-electrode sensor system together with a counter electrode and a reference electrode, or a four-electrode sensor system as described in T. Kakutani, T. Osakai, and M. Senda, Bull. Chem. Soc. Jpn., 56, 991 (1983).

As shown in Figure **2**, the electrode member **28** is partially immersed in the ion-sensitive section **23**, which is ion selective with respect to the ions contained in a sample liquid (not shown in Figure **2**) as described below.

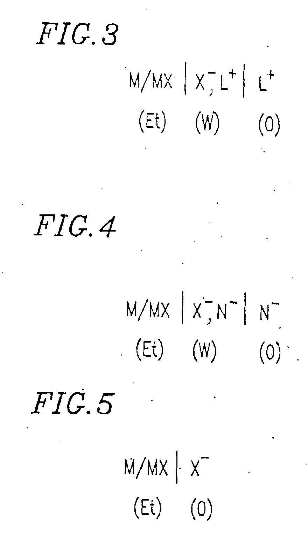

Figure **3** is a schematic diagram of an exemplary current-detection ion-selective electrode (represented by reference numeral **21** in Figure **2**) including the electrode member (represented by reference numeral **28** in Figure **2**) and the ion-sensitive section (represented by reference numeral **23** in Figure **2**). The ion-sensitive section includes the water phase (W) (represented by reference numeral **27** in Figure **2**) and the oil phase (O) (represented by reference numeral **26** in Figure **2**).

The oil phase (O) and the water phase (W) are immiscible with each other. For example, a nitrcbenzene phase can be used as the oil phase (O). The oil phase (O) and the water phase (W) each can be in the form of a liquid, gel, solid electrolyte solution, or solid solution. In Figure **3**, M/MX represents the electrode member (Et) (represented by reference numeral **28** in Figure **2**) including a metal (M) and a metal salt (MX) which is substantially insoluble in water. A part of the electrode member (Et) is in contact with the water phase (W) as described above. The water phase (W) contains a material including anions (X⁻), which can form a metal salt (MX), and cations (L⁺) freely transferable between the water phase (W) and the oil phase (O). The oil phase (O) contains an ionophore and a supporting electrolyte which can release the cations (L⁺). The oil phase (O) can be formed of a single phase or a plurality of phases which are in liquid junction with each other via a salt bridge.

Figure **4** is a schematic diagram of another exemplary current-detection ion-selective electrode (represented by reference numeral **21** in Figure **2**) including the electrode member (Et) (represented by reference numeral **28** in Figure **2**) and the ion-sensitive section (represented by reference numeral **23** in Figure **2**). The ion-sensitive section includes the water phase (W) (represented by reference numeral **27** in Figure **2**) and the oil phase (O) (represented by reference numeral **26** in Figure **2**).

As shown in Figure **4**, the water phase (W) contains a material including a first type of anions (X⁻), which can form a metal salt (MX), and a second type of anions (N⁻). The oil phase (O) contains an ionophore and a supporting electrolyte which can release the second type of anions (N⁻).

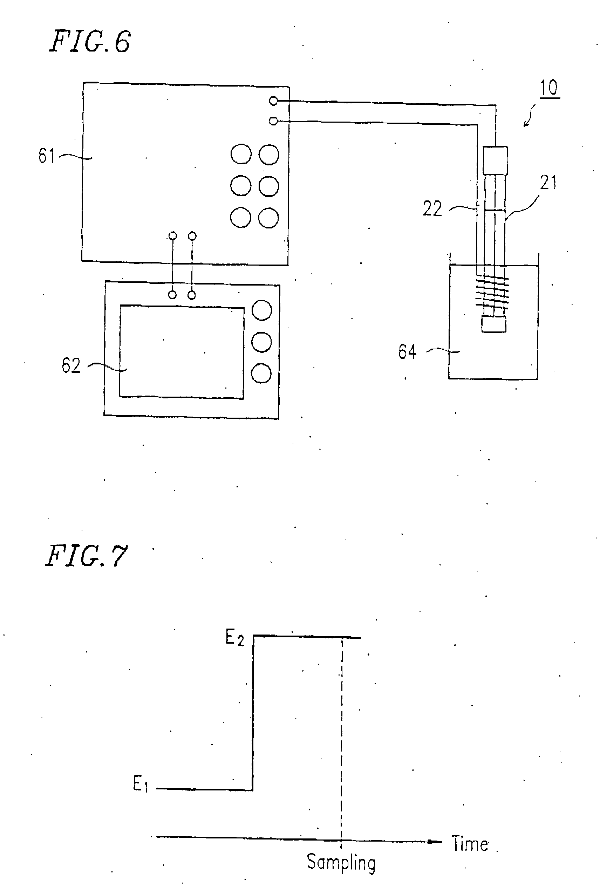

Figure **5** is a schematic diagram of still another exemplary current-detection ion-selective electrode (represented by reference numeral **21** in Figure **2**) including the electrode member (Et) (represented by reference numeral **28** in Figure **2**) and the ion-sensitive section (represented by reference numeral **23** in Figure **2**).

As shown in Figure **5**, the electrode member (Et) including a metal (M) and a metal salt (MX) is partially in contact with the oil phase (0). In such a case; the oil phase (0) contains an ionophore and a supporting electrolyte which can release anions (x⁻), which can form a metal salt (MX).

Examples of the combination of M/MX included in the electrode member (Et) shown in Figures **3** and **4** include silver/silver chloride, mercury/calomel, mercury/mercury sulfate, and mercury/mercury oxide. An example of the combination of M/MX included in the electrode member (Et) shown in Figure **5** is silver/silver tetraphenylborate.

As the supporting electrolyte contained in the oil phase (O), a greatly hydrophobic electrolyte is used. Preferable examples of an electrolyte include tetrabutylammonium tetraphenylborate, tetrapentylammonium tetraphenylborate, tetrahexylammonium tetraphenylborate, and tetrapentylammonium tetrakis[3,5-bis(trifluoromethyl)phenyl borate]. The range of concentrations of the supporting electrolyte contained in the oil phase (O) is known in the art, and a suitable concentration can be adjusted as necessary.

The ionophore contained in the oil phase (O) can be selected in accordance with the type of ions to be submitted to concentration measurement. Usable ionophores include biscrown ethers such as dibenzo-18-crown-6, dibenzo-30-crown-10, bisbenzo-15-crown-5, and bis-12-crown-4; nonactin, monactin, valinomycin, enniatin B, and quarternary ammonium salts. The concentration of the ionophore contained in the oil phase (O) can .be changed in accordance with the type of ionophore and the type of ions subjected to concentration measurement. The concentration can be in the conventionally used range, i.e., several millimol/liter to several tens of millimol/liter, and does not have to be excessively high.

The supporting electrolyte and the ionophore in the oil phase (O) are dissolved in any of the following media, which are preferable but not limiting: nitrobenzene, 1,2-dichloroethane, o-nitrophenyl octyl ether, o-nitrophenyl phenyl ether, 2-fluoro-2-nitrodiphenyl ether, dioctyl phthalate, dioctyl adipate, and dioctyl sebacate.

Examples of the counter electrode include a silver/silver oxide electrode, a silver electrode, a platinum electrode, and a carbon electrode.Such electrodes usable as the counter electrode are known in the art and any suitable one can be selected.

In the case of a three-electrode sensor system or a four-electrode sensor system, examples of a reference electrode include a silver/silver chloride electrode, a mercury/calomel electrode, a mercury/mercury sulfate electrode, a mercury/mercury oxide electrode, and a silver/silver tetraphenylborate electrode. Such electrodes usable as the reference electrode are also known in the art and any suitable one can be selected.

Hereinafter, a method for measuring the ion concentration of a sample liquid using a two-electrode sensor system will be described. The two-electrode sensor system includes a current-detection ion-selective electrode and a counter electrode.

Figure **6** shows a schematic structure of a measuring system including the two-electrode sensor system **10** usable for measuring an ion concentration by the method according to the present invention. The two-electrode sensor system **10** including the current-detection ion-selective electrode **21** and the counter electrode **22**, a multi-purpose voltammetry apparatus **61**, and a recording meter **62** are connected as shown in Figure **6**. The voltammetry apparatus **61** can perform various types of voltammetry measurement such as cyclic voltammetry, differentiation pulse voltammetry, and normal pulse voltammetry. As the voltammetry apparatus **61**, any measuring apparatus is usable which can perform pulse amperometry of applying a short pulse potential having a pulse width of about 100 milliseconds between the current-detection ion-selective electrode **21** and the counter electrode **22** at a constant interval and then obtaining the response current. The recording meter **62** is provided with a microcomputer for controlling the voltammetry apparatus **61**. The microcomputer also records, displays and processes signals output from the voltammetry apparatus **61**.

The current-detection ion-selective electrode **21** and the counter electrode **22** are both partially immersed in a sample liquid **64** containing ions, the concentration of which is to be measured.

Then, one or more specific potentials lower than the minimum value of the limiting current potential range for the ions are applied between the current-detection ion-selective electrode **21** and the counter electrode **22**. The specific potentials to be applied are determined based on the known limiting current potential range for the kind of ions in the sample liquid **64** whose concentration will be measured and also based on the ionophore concentration (i.e., the formulation of the ion-sensitive section **23** (Figure **2**)) in the current-detection ion-selective electrode **21**. The potentials to be applied are typically at least 0.1 but less than 1 times the minimum value of the limit current potential range for the ions, and preferably in the range between 0.3 and 0.9 times the minimum value of.the limit current potential range for the ions. When the potential is 1 or more times the minimum value, an error occurs for measurement of an excessively high ion concentration. When the potential is less than 0.1 times the minimum value, a measurement error tends to occur. In actual measurement, a potential in the range where the calibration curve of the sample liquid **64** shows linearity can be arbitrarily selected.

The levels of the response current generated by the application of the potentials are detected by a known method. For example, the application of the potential and the detection of the response current levels can be preferably performed by a step potential method or a pulse potential method.

The step potential method is carried out in the following manner. One or more step potentials are applied to the sample liquid. The step potentials increase stepwise from an initial potential (natural potential) at which ions do not transfer up to the one or more specific potentials used for the measuring method according to the present invention. Then, the level of a response current is detected (i.e., sampled) after a prescribed time period (e.g., 100 milliseconds after application of the potential) for each step potential.

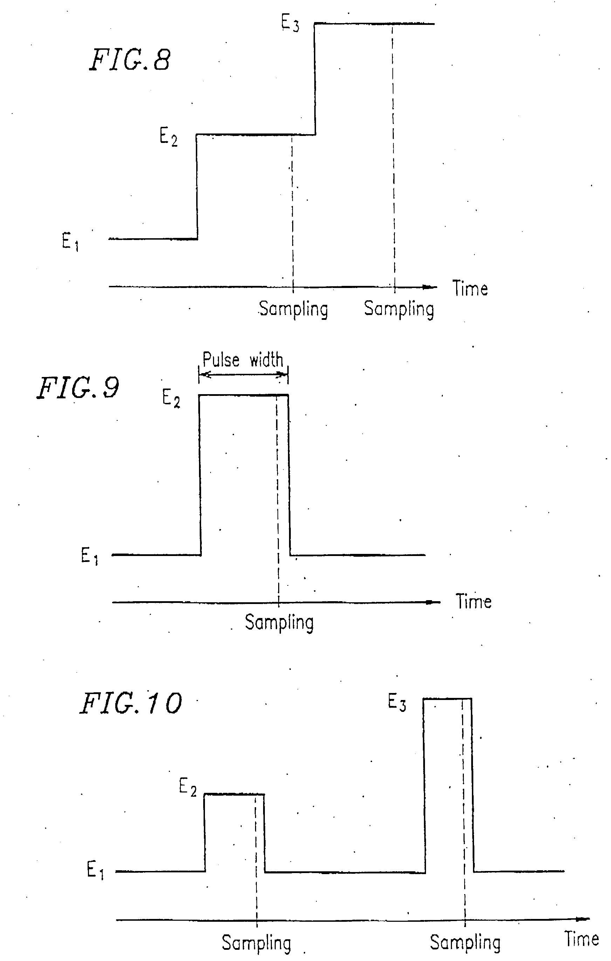

Figure **7** shows the relationship between the applied potential and the time for detection. In the case shown in Figure **7**, one step potential E₂, which is increased from the initial potential E₁ in a step-like manner, is applied. Figure **8** also shows the relationship between the applied potential'and the time for detection. in the case shown in Figure **8**, a plurality of potentials E₂ and E₃, which increase from the initial potential E₁ in a step-like manner, are applied. Note that potential E₃ increases from potential E₂ rather than the initial potential E₁. Based on the sampled levels of the response current, one or more response values (i.e., ion concentrations corresponding to the sampled levels) can be obtained by a calculation method known in the art in accordance with the target for measurement (type of ions).

The pulse potential method is carried out in the following manner. One or more pulse potentials are applied to the sample liquid. Each pulse potential increases from an initial potential (natural potential) at which ions do not transfer up to a specific potential in a step-like manner and then is maintained at that potential for a prescribed time period (e.g., 100 milliseconds), before decreasing to the initial potential in a step-like manner. Each succeeding pulse potential is increased above the potential of the previous pulse potential. The time period during which each pulse potential is maintained at the above-mentioned potential is referred to as a "pulse width". The level of the response current is detected (i.e., sampled) at a prescribed point during the pulse width. The specific potential mentioned above is any one of the one or more potentials used for the measuring method according to the present invention as described above.

Figure **9** shows the relationship between the applied pulse potential and the time for detection. In the case shown in Figure **9**, one pulse potential E₂, which is increased from the initial potential E₁, is applied. Figure **10** also shows the relationship between the applied pulse potential and the time for detection. In the case shown in Figure **10**, a plurality of pulse potentials E₂ and E₃, each of which is increased from the initial potential E₁, are applied. Based on the sampled levels of the response current, one or more response values can be obtained by a calculation method known in the art in accordance with the target for measurement.

The above-described potential step method and the pulse potential method are known in the art, and conditions (e.g., pulse width, pulse interval) for applying the step potentials or the pulse potentials can be arbitrarily selected.

The sampled level of the response current is applied to the calibration curve representing the relationship between the response current levels and the ion concentrations, and thus the concentration of the ions is determined.

By the method for measuring the ion concentration of a sample liquid according to the present invention, even an excessively high ion concentration of the sample liquid can be measured quickly and accurately without increasing the ionophore concentration of the current-detection ion-selective electrode to an excessively high level. Since the sample liquid need not be diluted for measurement, the measurement time can be shortened and also measurement errors caused by the dilution can be avoided. The method according to the present invention is useful for measuring the concentration of, for example, sodium ions, potassium ions, chloride ions, magnesium ions, and calcium ions.

The method according to the present invention is useful for monovalent cations, bivalent cations, tervalent cations and monovalent anions. The monovalent cations include alkali metal ions, mercury (I) ions, silver ions, and copper (I) ions. The bivalent cations include alkaline-earth metal ions, manganese ions, iron (II) ions, copper (II) ions, cadmium ions, zinc ions, nickel ions, palladium ions, lead ions, mercury (II) ions, and tin (II) ions. The tervalent cations include aluminum ions, chrome (III) ions, and iron (III) ions. Monovalent anions include chloride ions, bromide ions, and iodide ions. The method according to the present invention is specifically useful for sodium ions, potassium ions, chloride ions, magnesium ions, calcium ions and the like.

The method according to the .present invention is useful for measurement of ion concentrations of fluids from organisms, waste water from plants, and fluids existing in an environment such as fluids in rain, ground water, river water, lake water and seawater.

### (Examples)

Hereinafter, the present invention will be described by way of more practical illustrative, but non-limiting examples with reference to the accompanying drawings.

### <Example: Measurement of concentration of sodium ions>

The current-detection ion-selective electrode **21** shown in Figure **2** was produced in the following manner.

A hydrophilic semipermeable membrane **25** (thickness: 20 µm; produced by SANKO JUNYAKU Co., Ltd.) was attached on one of the end surfaces of a glass tube **24** having an inner diameter of 2 mm. Next, 8 µℓ of a nitrobenzene solution containing 0.1 mol/liter of tetrapentylammonium tetraphenylborate (TPATPB) and 0.02 mol/liter of bis-12-crown-4 (B12C4) was injected into the glass tube **24** using a syringe, thereby forming an oil phase **26**. Then, 1 mℓ of an aqueous solution containing 0.05 mol/liter of n-tetrapentylammonium chlbride (TPACl) and 0.1 mol/liter of MgSO₄ was injected into the glass tube **24** using a syringe, thereby forming a water phase **27**. After that, a silver/silver chloride electrode used as an electrode member **28** was inserted into the glass tube **24** until a bottom end part thereof was immersed in the water phase **27**. A cap **29** was attached to the other end of the glass tube **24** to secure the electrode member **28** to the glass tube **24**. Thus, the current-detection ion-selective electrode **21** was completed. A silver/silver chloride electrode used as a counter electrode **22** was wound around a bottom part of the glass tube **24**. In this manner, the two-electrode sensor system **10** was produced.

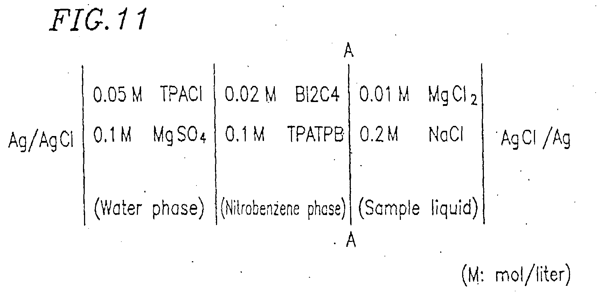

Next, the measuring system shown in Figure **6** was produced in the following manner. The two-electrode sensor system **10** including the current-detection ion-selective electrode **21** and the counter electrode **22**, a voltammetry apparatus **61**, and a recording meter **62** were connected as shown in Figure **6**. A bottom part of the current-detection ion-selective electrode **21** and a bottom part of the counter electrode **22** were partially immersed in a sample liquid **64**, i.e., an aqueous solution containing 0.2 mol/liter of NaCl and 0.01 mol/liter of MgCl₂. Figure **11** shows the measuring system using the two-electrode sensor system **10**.

In Figure **11**, an interface represented by line **A-A** is an oil/water interface at the hydrophilic semipermeable membrane **25** between the nitrobenzene phase provided as an oil phase **26** (Figure **2**) and the sample liquid **64**.

Normal pulse voltammetry was performed by applying pulse potentials to the measuring system, each pulse potential having a pulse width of 100 milliseconds and increasing by 10 mV increments at intervals of 5 seconds from 140 mV (initial potential) up to 430 mV.

Normal pulse voltammetry was performed in the same manner using another sample liquid containing 0.4 mol/liter of NaCl and 0.01 mol/liter of MgCl₂.

The minimum value of the limiting current potential range in each case was obtained from the current-potential curve (normal pulse voltammogram) measured at various concentrations.of NaCl using a method known in the art. The minimum value of the limiting current potential range for each sample liquid was about 370 mV.

Then, for a plurality of sample liquids containing NaCl at different known concentrations, pulse potentials each having a pulse width of 100 milliseconds were applied to the measuring system from 130 mV (initial potential) up to 200 mV (which is lower than the minimum value of the limiting current potential range). The response current levels were detected after 100 milliseconds for each pulse potential. From each of the resultant response current levels, a response current level obtained by measuring a sample liquid not including NaCl (base current level) was subtracted. In this manner, calibrated current levels were obtained.

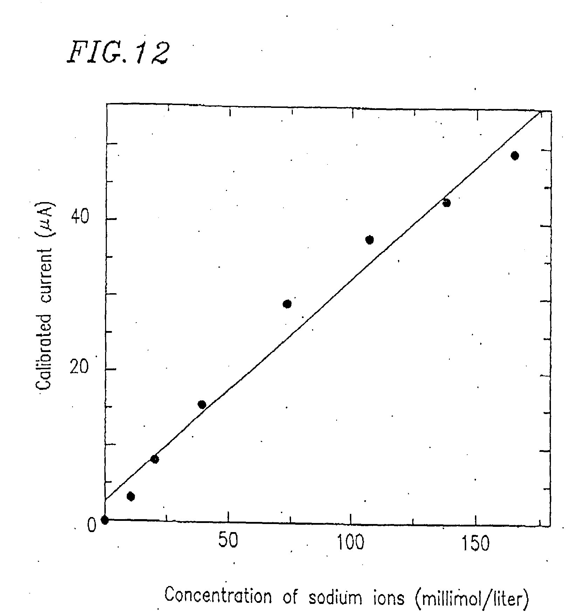

Figure **12** shows the calibration curve representing the relationship between the resultant calibrated current levels and the sodium concentrations. As shown in Figure **12**, the calibration curve shows sufficient linearity over a wide range of sodium ion concentrations. The calibrated current level I and the sodium ion concentration C have the relationship of I=2.254+0.300C in the range of sodium ion concentrations between 0 millimol/liter and 160 millimol/liter. The correlation coefficient (r) was 0.989.

A pulse potential was applied to human plasma containing about 140 millimol/liter of sodium ions using the current-detection ion-selective electrode **21**, and the response current level was measured. The sodium ion concentration was obtained using the above-described calibration curve and the resultant response current level. The sodium ion concentration obtained in this manner matched the prescribed sodium ion concentration.

### <Comparative example>

For a plurality of sample liquids containing at different known concentrations, pulse potentials each having a pulse width of 100 milliseconds were applied to the measuring system from 130 mV (initial potential) up to 400 mV (which is higher than the minimum value of the limiting current potential range). The response current levels were detected after 100 milliseconds for each pulse potential. From each of the resultant response current levels, a response current level obtained by measuring a sample liquid not including NaCl (base current level) was subtracted. Thus, calibrated current levels were obtained.

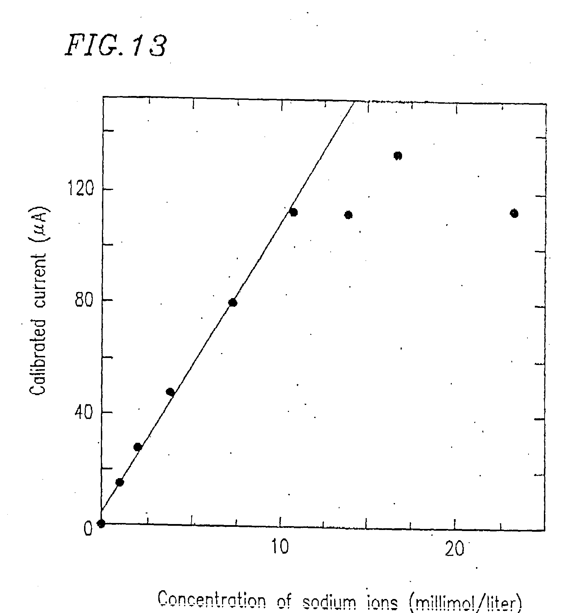

Figure 13 shows the calibration curve representing the relationship between the resultant calibrated current levels and the sodium ion concentrations. As shown in Figure 13, the calibration curve shows sufficient linearity only in a narrow range of sodium ion concentrations between 0 millimol/liter and 10.7 millimol/liter. The calibrated current level I and the sodium ion concentration C have the relationship of I=3.074+10.277C in the range of sodium ion concentrations between 0 millimol/liter and 10.7 millimol/liter. The correlation coefficient (r) was 0.998.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A method for measuring a concentration of ions contained in a sample liquid using a current-detection ion-selective electrode, the method comprising the steps of:
contacting the current-detection ion-selective electrode and a counter electrode to the sample liquid; and
applying at least one potential which is lower than a minimum value of a limiting current potential range for the ions between the current-detection ion-selective electrode and the counter electrode.

2. A method according to claim 1, wherein the step of applying the potential includes the step of performing either one of a step potential method and a pulse potential method.

3. A method according to claim 1, wherein the ions are at least one type of ions selected from the group consisting of monovalent cations, bivalent cations, tervalent cations and monovalent anions.

4. A method according to claim 1, wherein the ions are at least one type of ions selected from the group consisting of sodium ions, potassium ions, chloride ions, magnesium ions and calcium ions, and the sample liquid is a fluid from an organism.

5. A method according to claim 1, wherein the sample liquid is one selected from the group consisting of a fluid from an organism, plant waste water, and a liquid existing in an environment.

6. A method according to claim 1, wherein the current-detection ion-selective electrode includes an ion-sensitive section which is ion selective with respect to the ions in the sample liquid and an electrode member in contact with the ion-sensitive section.

7. A method according to claim 6, wherein the ion-sensitive section includes an ionophore and a supporting electrolyte for releasing either one of cations and anions.

8. A method for measuring a concentration of ions contained in a sample liquid using a current-detection ion-selective electrode, the method comprising the steps of:
contacting the current-detection ion-selective electrode and a counter electrode to the sample liquid;
applying at least one potential which is lower than a minimum value of a limiting current potential range for the ions between the current-detection ion-selective electrode and the counter electrode; and
detecting a level of a response current generated between the current-detection ion-selective electrode and the counter electrode.

9. An apparatus for measuring a concentration of ions contained in a sample liquid using a current-detection ion-selective electrode, the apparatus comprising:
a device for applying at least one potential which is lower than a minimum value of a limiting current potential range for the ions between the current-detection ion-selective electrode and the counter electrode both in contact with the sample liquid.

10. An apparatus according to claim 9, wherein the current-detection ion-selective electrode includes an ion-sensitive section which is ion selective with respect to the ions in the sample liquid and an electrode member in contact with the ion-sensitive section.
